# EUROPEAN PATENT APPLICATION

(11) **EP 4 834 543 A2**
(43) Date of publication of application: **04.11.2026**
(21) Application number: 26200067.2
(22) Date of filing: 20.08.2026
(51) Int. Cl.: B25J 15/00

(54) **BIONIC ROBOT HAND**

(30) Priority: 10.03.2026 CN 202620289151 U
(71) Applicant: Shanghai TARS Robotics Co., Ltd., Shanghai 200233 (CN)
(72) Inventor: WANG, Tianyi, Shanghai, 200233 (CN); ZHU, Xing, Shanghai, 200233 (CN)
(74) Representative: JD&P Patent Attorneys Joanna Dargiewicz & Partners

(57) **Abstract**

A bionic robot hand includes a hand housing, a finger assembly, and dorsal skins, where the hand housing includes a palmar plate and a dorsal plate that are snap-fitted together; four first grooves are formed in an outer surface of the dorsal plate; the finger assembly includes an index finger, a middle finger, a ring finger, and a little finger; a metacarpal of each finger is fixed by a first fastener, and clamped between the palmar plate and the dorsal plate; a head of the first fastener is accommodated in a corresponding first groove of the dorsal plate; each dorsal skin is embedded into the corresponding first groove of the dorsal plate, and covers the head of the corresponding first fastener; and an outer surface contour of each dorsal skin is in smooth transition with a back contour of a corresponding finger. By hiding the fastener, this application improves the bionic effect.

## Description

### TECHNICAL FIELD

The present disclosure relates to the technical field of bionic robots, and in particular to a bionic robot hand.

### BACKGROUND

A humanoid robot hand (hereinafter referred to as a "bionic hand") serves as a core end-effector for service robots, special operation robots, and applications involving human-machine interaction. Apart from dexterous manipulation capability, a highly anthropomorphic appearance is also crucial for the robot hand to enhance user acceptance and affinity in scenarios including social interaction, caregiving, and demonstration.

At present, a bionic hand includes a hand housing and fingers. The hand housing is generally assembled and connected with the fingers via fasteners such as screws and bolts. For example, the Chinese Patent Application No. CN 107803849 A provides a bionic robot finger. The bionic robot finger includes a distal phalanx, a middle phalanx, a proximal phalanx, and a metacarpal that are movably connected in sequence. The robot finger is bent by means of rotating joints. In this design, heads of fasteners for connecting various housings and phalanges are often directly exposed, forming prominent and non-bionic mechanical protrusions. This seriously impairs the streamlined contour of the hand and the integrity of the skin texture.

### SUMMARY OF PRESENT INVENTION

In view of drawbacks in the prior art, an objective of the present disclosure is to provide a bionic robot hand capable of hiding fasteners.

To achieve the above objective, the present disclosure provides the following technical solutions:
A bionic robot hand includes: a hand housing, where the hand housing includes a palmar plate and a dorsal plate that are snap-fitted together, and four first grooves are formed in an outer surface of the dorsal plate; a finger assembly, where the finger assembly includes an index finger, a middle finger, a ring finger, and a little finger; a metacarpal of each finger is fixed by a first fastener, and clamped between the palmar plate and the dorsal plate; and a head of the first fastener is accommodated in a corresponding first groove of the dorsal plate; and four dorsal skins, where each dorsal skin is embedded into the corresponding first groove of the dorsal plate, and covers the head of the corresponding first fastener; and an outer surface contour of each dorsal skin is in smooth transition with a back contour of a corresponding finger.

In a preferred embodiment, the dorsal skin is strip-shaped; and a length direction of the dorsal skin is disposed along an extension direction of the corresponding finger.

In a preferred embodiment, the fingers each include the metacarpal, a proximal phalanx, a middle phalanx, and a distal phalanx; a back of a housing of the middle phalanx is provided with a first covering portion; and the first covering portion covers a joint clearance between the middle phalanx and the distal phalanx; and a back of a housing of the proximal phalanx is provided with a second covering portion; and the second covering portion covers a joint clearance between the proximal phalanx and the middle phalanx.

In a preferred embodiment, a second groove is formed in an outer surface of the palmar plate; and the bionic robot hand further includes a palmar skin; and the palmar skin is embedded into the second groove, and covers the heads of the first fasteners.

In a preferred embodiment, a third groove is formed in the outer surface of the dorsal plate; the third groove communicates with the second groove; and the palmar skin includes one portion embedded into the second groove, and another portion embedded into the third groove.

In a preferred embodiment, the palmar plate and the dorsal plate are connected via a second fastener; and a head of the second fastener is accommodated in the second groove, and covered by the palmar skin.

In a preferred embodiment, the finger assembly further includes a thumb; and a metacarpal of the thumb is snap-fitted between the palmar plate and the dorsal plate; and a surface contour of a palmar skin is in smooth transition with a palm contour of the thumb.

A surface of the palmar skin is provided with a recessed contour for simulating a palm region of a human hand.

In a preferred embodiment, the bionic robot hand further includes a connecting base; the connecting base includes an inner base segment and an outer base segment that are connected together; the inner base segment is clamped between the palmar plate and the dorsal plate; and the outer base segment is located outside the hand housing.

In a preferred embodiment, a plurality of ribs are disposed on an outer surface of the connecting base.

In a preferred embodiment, the dorsal skin, the palmar skin, and a cladding layer on a surface of the finger are made of rubber, silicone, or thermoplastic polyurethane (TPU).

Compared with the prior art, the technical solutions have the following advantages:

The head of the first fastener for connecting the finger and the hand housing is accommodated in the first groove of the dorsal plate and covered by the embedded dorsal skin, and the head of the second fastener for connecting the hand housing is accommodated in the second groove of the palmar plate and covered by the palmar skin. This eliminates all exposed mechanical connection points on the surface of the hand.

The outer surface contour of the dorsal skin matches the adjacent finger and transitions smoothly, with consistent material and color. The mechanical structure and the dorsal skin form a continuous and natural biomechanical curved surface visually and tactually, thereby greatly reducing the mechanical assembly feel of the conventional robot hand and improving the bionic effect.

When the finger is bent toward the palmar side, the first covering portion and the second covering portion on the backs of the phalanges can effectively cover interphalangeal joint clearances.

### BRIEF DESCRIPTION OF THE DRAWINGS

FIG. 1 is a front view of a bionic robot hand according to the present disclosure; and
FIG. 2 is a back view of a bionic robot hand according to the present disclosure.

In the figures: 100-hand housing, 110-palmar plate, 111-second groove, 120-dorsal plate, 121-first groove, 122-third groove, 200-finger assembly, 201-metacarpal, 202-proximal phalanx, 203-middle phalanx, 204-distal phalanx, 210-thumb, 220-index finger, 230-middle finger, 240-ring finger, 250-little finger, 300-dorsal skin, 400-palmar skin, 500-connecting base, 510-inner base segment, and 520-outer base segment.

### DETAILED DESCRIPTION OF THE EMBODIMENTS

The following descriptions are intended to disclose the present disclosure, such that those skilled in the art can realize the present disclosure. The following preferred embodiments are merely used as an example for description, and other apparent variations are likewise conceivable to those skilled in the art. The basic principles of the present disclosure defined in the following descriptions may be applied to other embodiments, variations, improvements, equivalents, and other technical solutions without departing from the spirit and scope of the present disclosure.

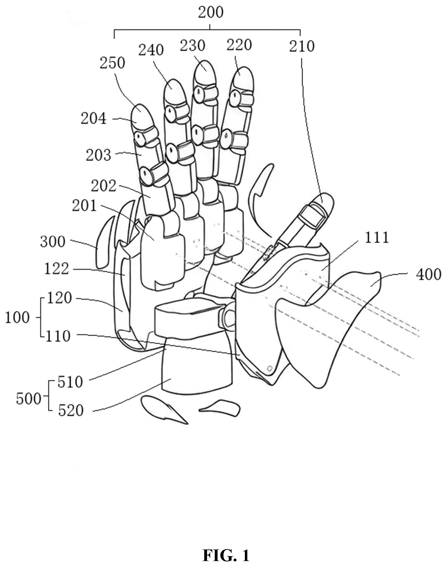

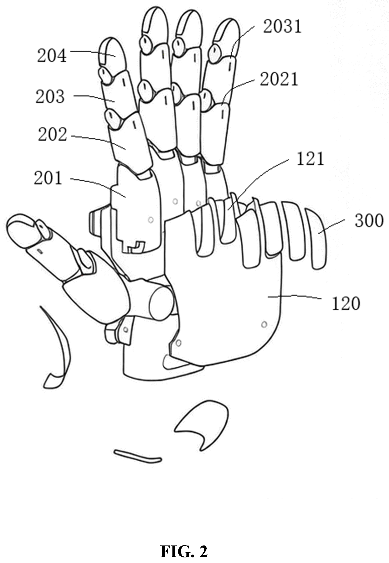

Referring to FIGS. 1 and 2, an embodiment of the present disclosure provides a bionic robot hand, including: a hand housing 100, a finger assembly 200, and four dorsal skins 300.

The hand housing 100 includes a palmar plate 110 and a dorsal plate 120 that are snap-fitted together. Four first grooves 121 are formed in an outer surface of the dorsal plate 120.

The finger assembly 200 includes an index finger 220, a middle finger 230, a ring finger 240, and a little finger 250. A metacarpal 201 of each finger is fixed by a first fastener, and clamped between the palmar plate 110 and the dorsal plate 120. A head of the first fastener is accommodated in a corresponding first groove 121 of the dorsal plate 120.

Each dorsal skin 300 is embedded into the corresponding first groove 121 of the dorsal plate 120, and covers the head of the corresponding first fastener. An outer surface contour of each dorsal skin 300 is in smooth transition with a back contour of a corresponding finger.

The head of the first fastener for connecting the hand housing 100 and the finger assembly 200 is accommodated and hidden in the first groove 121 of the dorsal plate 120. Then, the first groove 121 is fully filled and covered by the shape-matched dorsal skin 300. In this way, no mechanical fasteners can be seen from the outside, which effectively eliminates the mechanical feel due to exposed screws, and ensures the integrity and bionic effect of the hand back.

Meanwhile, the dorsal skin 300 is embedded into the corresponding first groove 121, and its outer surface contour is in smooth transition with the back contour of the corresponding finger, thereby forming a continuous and natural curved surface for the skin of the hand back.

As shown in FIG. 2, the dorsal plate 120 constitutes the hand back. The four first grooves 121 corresponding to roots of the index finger, the middle finger, the ring finger, and the little finger are formed in the outer surface of the dorsal plate 120.

During assembly of the finger assembly 200, a shank of the first fastener (such as a countersunk screw) is inserted through a hole in a bottom of the first groove 121, and finally tightened into the metacarpal 201 of the finger. When tightened in place, the head of the first fastener is fittingly embedded into the first groove 121 without being exposed.

The bionic skin is then assembled. The dorsal skin 300 is aligned with the corresponding first groove 121, and fixed in the first groove 121 via adhesive bonding, snap-fitting, or the like. With observation from the outside, the hand back region forms a complete bionic surface without any mechanical connection traces.

The dorsal skin 300 is preferably made of an elastic polymer material with a skin-like texture (such as silicone, TPU, or rubber). Upon assembly, the dorsal skin 300 fully fills a cavity of the first groove 121. Moreover, an exposed surface of the dorsal skin 300 is approximately flush with the outer surface of the dorsal plate 120, to form a flat surface without obvious tactile difference.

The dorsal skin 300 is strip-shaped, with a length direction disposed along an extension direction of the corresponding finger, and a width matching with a back width of the corresponding phalanx. Crucially, the dorsal skin 300 and a cladding layer on a surface of the phalanx are the same or highly similar in material texture, surface gloss, and color.

Upon full assembly, from a viewing angle of the observer, there is no significant difference in material, color, or height between the exposed surface of the dorsal skin 300 and the back of the corresponding finger. Visually, they extend naturally from one region to another, jointly simulating the integrity and continuity for the back skin of the human hand, greatly reducing the assembly feel of mechanical components and improving the bionic effect.

As shown in FIG. 1, the palmar plate 110 constitutes a palm surface of the hand. A second groove 111 is formed in an outer surface of the palmar plate 110.

The bionic robot hand further includes a palmar skin 400. The palmar skin 400 is embedded into the second groove 111, and covers the heads of the first fasteners. The palmar skin 400 is also made of the elastic material, and fixed in the second groove 111 via the adhesive bonding, the snap-fitting, or the like.

In this embodiment, the finger assembly 200 is connected to the dorsal plate 120 and the palmar plate 110 via the first fastener to form double-sided clamping. This significantly enhances the connection stability and overall structural strength. Accordingly, the head of the first fastener located at the palmar side is accommodated and hidden in the second groove 111, and completely covered by the palmar skin 400 embedded therein.

Referring to FIGS. 1 and 2, the finger assembly 200 further includes a thumb 210. A metacarpal 201 of the thumb 210 is snap-fitted between the palmar plate 110 and the dorsal plate 120. For example, the metacarpal 201 of the thumb 210 is snap-fitted with snap grooves in the palmar plate 110 and the dorsal plate 120. Certainly, it may also be reinforced by the first fastener.

A surface contour of the palmar skin 400 is in smooth transition with a palm contour of the thumb 210. Visually, a thenar portion of the thumb is seamlessly connected to a palm portion of the hand. Further, a recessed contour for simulating a natural form of a palm of the human hand is molded on a surface of the palmar skin 400. The recessed contour enhances the visual bionic effect, and its ergonomic curved surface facilitates object positioning in actual grasping to enhance the functionality.

As shown in FIG. 1 and FIG. 2, to further eliminate the adverse impact of the joint seam of the housing on the appearance, a third groove 122 is formed in the outer surface of the dorsal plate 120 and at an edge of the dorsal plate 120 snap-fitted with the palmar plate 110. After the palmar plate 110 and the dorsal plate 120 are assembled in place, the third groove 122 communicates with the second groove 111 in the palmar plate 110, jointly forming a continuous embedding groove bridging a bonding portion therebetween.

The palmar skin 400 can be embedded into the two communicating grooves. Specifically, the palmar skin 400 includes one portion embedded and fixed in the second groove 111, and another portion bridging a bonding line between the palmar plate 110 and the dorsal plate 120, and embedded and fixed in the third groove 122.

With this configuration, while the palmar skin 400 covers the heads of the fasteners in the second groove 111 at the palmar side, its bridging portion effectively shields a side seam generated when the dorsal plate 120 and the palmar plate 110 are snap-fitted, thereby further enhancing the bionic effect.

As shown in FIGS. 1 and 2, the palmar plate 110 and the dorsal plate 120 are further connected via a second fastener. A head of the second fastener is accommodated in the second groove 111, and covered by the palmar skin 400.

As shown in FIG. 1, the fingers each includes the metacarpal 201, a proximal phalanx 202, a middle phalanx 203, and a distal phalanx 204.

A back of a housing of the middle phalanx 203 is provided with a first covering portion 2031. The first covering portion 2031 covers a joint clearance between the middle phalanx 203 and the distal phalanx 204.

A back of a housing of the proximal phalanx 202 is provided with a second covering portion 2021. The second covering portion 2021 covers a joint clearance between the proximal phalanx 202 and the middle phalanx 203.

Since the finger is only bent toward the palmar side rather than the dorsal side, the covering portion on the back of the finger does not interfere with a normal movement range of the finger, ensuring reliable operation. Contour edges of the first covering portion 2031 and the second covering portion 2021 are arc-shaped to simulate a natural form of a back of the phalanx.

With this design, when the finger of the robot is bent toward the palmar side, the joint clearance on the back of the phalanx can be skillfully covered, thereby significantly reducing exposure of the internal mechanical structure. The finger can still maintain visual continuity and integrity similar to the biological finger during movement, which further enhances the dynamic bionic effect.

As shown in FIGS. 1 and 2, the bionic robot hand further includes a connecting base 500. The connecting base 500 includes an inner base segment 510 and an outer base segment 520 that are connected together. The inner base segment 510 is clamped between the palmar plate 110 and the dorsal plate 120. The outer base segment 520 is located outside the hand housing 100, and connected to a tail joint of a mechanical arm via a flange and the like. For example, the outer base segment 520 is inserted into the flange.

A cross-sectional area of the inner base segment 510 gradually increases from inside to outside along its axial direction. A cross-sectional area of the outer base segment 520 is basically the same along its axial direction. Two sides of the inner base segment 510 each are provided with the second fastener.

The inner base segment 510 is connected to the metacarpal 201 of the thumb 210. The metacarpal 201 of the thumb 210 is located under the index finger 220, the middle finger 230, the ring finger 240, and the little finger 250.

A plurality of protruding ribs are disposed on an outer surface of the connecting base 500. These ribs are arranged in parallel along an axial direction of the connecting base 500. There is a certain gap between adjacent ribs, such that alternating concave-convex anti-slip textures are formed along a circumferential direction of the outer base segment 520. This structure significantly increases friction between the hand and the connecting base 500, prevents slippage when a mounting torque is applied, and makes the mounting process safer and more labor-saving.

The bionic robot hand is assembled as follows:
First, drive mechanisms (such as motors and connecting rods) of various fingers (the index finger 220, the middle finger 230, the ring finger 240, and the little finger 250) that constitute the finger assembly 200 are respectively assembled into finger housings, thereby completing pre-assembly of fingers.

The metacarpal 201 of the thumb 210 and metacarpals 201 of other four fingers are placed at predetermined positions on the palmar plate 110.

The dorsal plate 120 is preliminarily aligned with the palmar plate 110. The first fastener passes through the through hole in the dorsal plate 120, and is screwed into a threaded hole in the metacarpal 201 of the finger, such that all fingers are preliminarily clamped between the palmar plate 110 and the dorsal plate 120. At this time, the head of the first fastener is embedded into the first groove 121 in the outer surface of the dorsal plate 120.

The inner base segment 510 of the connecting base 500 is placed at a reserved mounting position between the palmar plate 110 and the dorsal plate 120.

The second fastener passes through the palmar plate 110, mounting holes in two sides of the inner base segment 510, and the dorsal plate 120, such that the connecting base 500 and the hand housing 100 are tightly locked together. At this time, the head of the second fastener is located in the second groove 111 of the palmar plate 110.

An adhesive is applied onto a back of the palmar skin, or to corresponding positions of the second groove 111 and the third groove 122. The palmar skin 400 is aligned, with one portion embedded and fitted into the second groove 111 of the palmar plate 110, and another portion bridging through the joint seam between the palmar plate 110 and the dorsal plate 120, and embedded and fitted into the third groove 122 of the dorsal plate 120. At this time, the palmar skin 400 completely covers heads of all first fasteners and the head of the second fastener in the second groove 111.

The adhesive is applied onto backs of the four dorsal skins 300 or to corresponding first grooves 121. Each dorsal skin 300 is aligned with the corresponding first groove 121, embedded into the corresponding first groove 121, and pressed, ensuring that the dorsal skin 300 fully fills the cavity of the first groove 121. At this time, the heads of all first fasteners in the first groove 121 are completely covered.

The above embodiments are only used to illustrate the technical ideas and features of the present disclosure, such that those skilled in the art can understand the content of the present disclosure and implement the present disclosure accordingly. The scope of the present disclosure is not limited by the above embodiments.

## Claims

1. A bionic robot hand, comprising:
a hand housing (100), wherein the hand housing (100) comprises a palmar plate (110) and a dorsal plate (120) that are snap-fitted together; and four first grooves (121) are formed in an outer surface of the dorsal plate (120);
a finger assembly (200), wherein the finger assembly (200) comprises an index finger (220), a middle finger (230), a ring finger (240), and a little finger (250); a metacarpal (201) of each finger is fixed by a first fastener, and clamped between the palmar plate (110) and the dorsal plate (120); and a head of the first fastener is accommodated in a corresponding first groove (121) of the dorsal plate (120); and
four dorsal skins (300), wherein each dorsal skin (300) is embedded into the corresponding first groove (121) of the dorsal plate (120), and covers the corresponding head of the first fastener; and an outer surface contour of each dorsal skin (300) is in smooth transition with a back contour of a corresponding finger.

2. The bionic robot hand according to claim 1, wherein the dorsal skin (300) is strip-shaped; and a length direction of the dorsal skin (300) is disposed along an extension direction of the corresponding finger.

3. The bionic robot hand according to claim 1, wherein the fingers each comprises the metacarpal (201), a proximal phalanx (202), a middle phalanx (203), and a distal phalanx (204);
a back of a housing of the middle phalanx (203) is provided with a first covering portion (2031); and the first covering portion (2031) covers a joint clearance between the middle phalanx (203) and the distal phalanx (204); and
a back of a housing of the proximal phalanx (202) is provided with a second covering portion (2021); and the second covering portion (2021) covers a joint clearance between the proximal phalanx (202) and the middle phalanx (203).

4. The bionic robot hand according to claim 1, wherein a second groove (111) is formed in an outer surface of the palmar plate (110); and
the bionic robot hand further comprises a palmar skin (400); and the palmar skin (400) is embedded into the second groove (111), and covers the heads of the first fasteners.

5. The bionic robot hand according to claim 4, wherein a third groove (122) is formed in the outer surface of the dorsal plate (120); the third groove (122) communicates with the second groove (111); and the palmar skin (400) comprises one portion embedded into the second groove (111), and another portion embedded into the third groove (122).

6. The bionic robot hand according to claim 4, wherein the palmar plate (110) and the dorsal plate (120) are connected via a second fastener; and a head of the second fastener is accommodated in the second groove (111), and covered by the palmar skin (400).

7. The bionic robot hand according to claim 1, wherein the finger assembly (200) further comprises a thumb (210); and a metacarpal (201) of the thumb (210) is snap-fitted between the palmar plate (110) and the dorsal plate (120); and
a surface contour of a palmar skin (400) is in smooth transition with a palm contour of the thumb (210).

8. The bionic robot hand according to claim 1, further comprising a connecting base (500), wherein the connecting base (500) comprises an inner base segment (510) and an outer base segment (520) that are connected together; the inner base segment (510) is clamped between the palmar plate (110) and the dorsal plate (120); and the outer base segment (520) is located outside the hand housing (100).

9. The bionic robot hand according to claim 8, wherein a plurality of ribs are disposed on an outer surface of the connecting base (500).
